# EUROPÄISCHE PATENTSCHRIFT

(11) **EP 2 079 776 B1**
(45) Veröffentlichungstag und Bekanntmachung des Hinweises auf die Patenterteilung: **12.01.2011**
(21) Anmeldenummer: 08803272.7
(22) Anmeldetag: 27.08.2008
(51) Int. Cl.: C08G 65/20

(54) **VERFAHREN ZUR DEPOLYMERISATION VON MONO- UND/ODER DIESTERN DES POLYTETRAHYDROFURANS ENTHALTENDEN GEMISCHEN**
METHOD FOR THE DEPOLYMERIZATION OF MIXTURES THAT CONTAIN MONO- AND/OR DIESTERS OF POLYTETRAHYDROFURANE
PROCÉDÉ DE DÉPOLYMÉRISATION DE MONO ET/OU DE DIESTERS DE MÉLANGES CONTENANT DU POLYTÉTRAHYDROFURANE

(30) Priorität: 06.09.2007 EP 07115807
(43) Veröffentlichungstag der Anmeldung: 22.07.2009
(73) Patentinhaber: BASF SE, 67056 Ludwigshafen (DE)
(72) Erfinder: WABNITZ, Tobias, 68169 Mannheim (DE); FERRE GIMENEZ, Ricardo, 67434 Neustadt (DE); LAUBNER, Robert, 67112 Mutterstadt (DE); STOLLE, Ralf, 68623 Lampertheim (DE)
(86) Internationale Anmeldenummer: PCT/EP2008/061237
(87) Internationale Veröffentlichungsnummer: WO 2009/030619

(56) Entgegenhaltungen:
- EP-A- 0 535 515
- WO-A-2007/141148
- DE-A1- 2 801 578
- US-B1- 6 429 321

## Beschreibung

Die Erfindung betrifft ein Verfahren zur Depolymerisation von Mono- und/oder Diestern des Polytetrahydrofurans enthaltenden Gemischen in Gegenwart eines sauren Katalysators und eines C₁- bis C₃-Alkohols bei Temperaturen von 80 bis 200°C und einem Druck von 0,05 bis 0,5 MPa, wobei das molare Verhältnis des C₁- bis C₃-Alkohols zu den im Gemisch enthaltenen Carboxygruppen größer 1 ist.

Polytetrahydrofuran - im folgenden PTHF genannt - das auch als Polyoxybutylenglykol bekannt ist, wird in der Kunststoff- und Kunstfaserindustrie als vielseitiges Zwischenprodukt verwendet und dient unter anderem zur Herstellung von Polyurethan-, Polyester- und Polyamid-Elastomeren. Daneben ist es, wie auch einige seiner Derivate, in vielen Anwendungsfeldern ein wertvoller Hilfsstoff, so zum Beispiel als Dispergiermittel oder beim Entfärben (Deinken) von Altpapier.

PTHF wird technisch üblicherweise durch Polymerisation von Tetrahydrofuran - im folgenden kurz THF genannt - an geeigneten Katalysatoren hergestellt. Durch Zugabe geeigneter Reagenzien kann die Kettenlänge der Polymerketten gesteuert werden und so das mittlere Molekulargewicht auf den gewünschten Wert eingestellt werden. Die Steuerung erfolgt dabei durch Wahl von Art und Menge des Telogens. Solche Reagenzien werden Kettenabbruchreagenzien oder "Telogene" genannt. Durch die Wahl geeigneter Telogene können zusätzlich funktionelle Gruppen an einem oder beiden Enden der Polymerkette eingeführt werden.

Großtechnisch werden ganz überwiegend zweistufige Verfahren durchgeführt, bei denen Tetrahydrofuran z.B. in Gegenwart von Fluorsulfonsäure zu Polytetrahydrofuran-Estern polymerisiert und anschließend zu Polytetrahydrofuran hydrolysiert wird.

Vorteilhaft ist insbesondere die THF-Polymerisation oder THF-Copolymerisation in Gegenwart von C₂- bis C₁₂-Carbonsäureanhydriden oder deren Gemischen mit C₂- bis C₁₂-Carbonsäuren wie z.B. Acetanhydrid oder Acetanhydrid-Essigsäure Gemische in Gegenwart saurer Katalysatoren zu Mono- und/oder Diestern des PTHF's und anschließende basisch katalysierte Umesterung der PTHF-Ester oder Ester der THF-Copolymere mit Methanol zu PTHF oder THF-Copolymeren (mit endständigen Hydroxygruppen).

Umesterungsverfahren für PTHF-ester sind beispielsweise in EP-A 38 009 und DE-A 28 01 578 beschrieben.

PTHF-ester, die nicht das gewünschte Zielmolekulargewicht aufweisen oder aus anderen Gründen nicht den Anforderungen für die Weiterverarbeitung zu PTHF genügen, beispielsweise aufgrund zu hoher Viskosität, zu breiter Molmassenverteilung, zu hoher Farbzahl oder aufgrund von Verunreinigungen, können dadurch verwertet werden, dass sie durch Depolymerisation zurück in THF überführt werden, welches gereinigt und als Edukt wieder in den Prozess zurückgeführt werden kann. Beispielsweise werden nach dem aus JP-A-11-269262 bekannten Verfahren PTHF-Ester mit niedriger Molmasse zunächst von dem PTHF-ester des gewünschten Molekulargewichts destillativ getrennt und anschließend hydrolysiert und depolymerisiert, während PTHF-Ester des gewünschten Molekulargewichts zum Endprodukt PTHF umgeestert werden. Unter den Bedingungen der beschriebenen Depolymerisation kann die aus dem depolymerisierten Ester freiwerdende Säure jedoch korrosiv wirken oder den Katalysator deaktivieren.

Aufgabe der vorliegenden Erfindung ist es, ein wirtschaftlich zu betreibendes Verfahren zur Depolymerisation von Gemischen aus Mono- und/oder Diestern des Polytetrahydrofuran, die gegebenenfalls niedermolekulare lineare oder cyclische Oligomere des Polytetrahydrofurans enthalten, zu entwickeln, bei dem ein Katalysator mit guter Standzeit und Ausbeute verwendet wird und gut-abtrennbare, nicht-korrosive und nicht-katalysatordeaktivierend wirkende Nebenprodukte gebildet werden.

Überraschend wurde nun gefunden, dass ein Verfahren zur Depolymerisation von Mono- und/oder Diestern des Polytetrahydrofuran enthaltenden Gemischen in Gegenwart eines sauren Katalysators und eines C₁- bis C₃-Alkohols bei Temperaturen von 80 bis 200 °C und einem Druck von 0,05 bis 0,5 MPa, wobei das molare Verhältnis des C₁-bis C₃-Alkohols zu den im Gemisch enthaltenen Carboxygruppen größer 1 ist, diese Aufgabe löst.

Durch das erfindungsgemäße Verfahren wird die Freisetzung von Essigsäure wie dies in den Verfahren des Standes der Technik geschieht, vermieden. Stattdessen wird ein leicht abtrennbarer Essigsäurerester, bevorzugt Methylacetat gebildet. Methylacetat ist durch Carbonylierung direkt und wirtschaftlich wieder in Essigsäureanhydrid überführbar, das wieder in den PTHF-Herstellungsprozeß einfließen kann.

Als Katalysatoren kommen insbesondere diejenigen sauren Katalysatoren, die in der Lage sind auch die Polymerisation zu katalysieren, in Frage.

Darunter seien beispielsweise Katalysatoren auf Basis von sauren Tonerden oder Bleicherden, wie sie beispielsweise in DE-A 1 226 560 beschrieben sind, genannt. Bleicherden, insbesondere auch aktivierte Montmorillonite, können als Formkörper im Festbett oder in Suspension verwendet werden.

Heteropolysäuren, die erfindungsgemäß ebenfalls verwendet werden können, sind anorganische Polysäuren, die im Gegensatz zu Isopolysäuren mindestens zwei verschiedene Zentralatome besitzen. Heteropolysäuren entstehen aus jeweils schwachen mehrbasigen Sauerstoffsäuren eines Metalles, wie Chrom, Molybdän, Vanadium und Wolfram sowie eines Nichtmetalles, wie Arsen, Jod, Phosphor, Selen, Silizium, Bor und Tellur als partielle gemischte Anhydride. Als Beispiele seien die Dodecawolframphosphorsäure H₃(PW₁₂O₄₀) oder die Decamolybdophosporsäure H₃(PMo₁₂O₄₀) genannt. Die Heteropolysäuren können als zweites Zentralatom auch Aktinoide oder Lanthanoide enthalten (Z. Chemie 17 (1977), Seiten 353 bis 357 bzw. 19 (1979), 308). Die Heteropolysäuren können allgemein durch die Formel H₈ₙ(YⁿM₁₉O₄₀) mit n = Wertigkeit des Elementes Y (z.B. Bor, Silizium, Zink) beschrieben werden (s. auch Heteropoly- und Isopoly-oxomtalates, Berlin; Springer 1983). Für das erfindungsgemäße Verfahren sind als Katalysatoren Phosphorwolframsäure, Phosphormolybdänsäure, Siliziummolybdänsäure und Siliziumwolframsäure besonders gut geeignet.

Die als Katalysatoren verwendeten Heteropolysäuren können sowohl getrocknet (1 bis 10 Mol Wasser/Mol Heteropolysäure) oder ungetrocknet (10 bis 40 Mol Wasser/Mol Heteropolysäure) in der Depolymerisation verwendet werden.

Weiterhin sind Katalysatoren auf Basis gemischter Metalloxide für die Depolymerisation zu THF geeignet. So beschreibt die JP-A 04-306 228 gemischte Metalloxide bestehend aus Metalloxiden der Formel MₓO_{y} mit ganzzahligen x und y im Bereich 1-3. Genannt werden als Beispiele Al₂O₃-SiO₂, SiO₂-TiO₂, SiO₂-ZrO₂ und TiO₂-ZrO₂.

Die US 5,208,385 offenbart Katalysatoren auf Basis amorpher Silicium/Aluminium-Mischoxide. Auch Mischoxide auf Basis SnO₂/SiO₂, Ga₂O₃/SiO₂, Fe₂O₃/SiO₂, In₂O₃/SiO₂, Ta₂O₅/SiO₂ und HfO₂/SiO₂ sind bekannt. Die vorgenannten Katalysatoren werden bevorzugt durch Copräzipitation/Sol-Gel-Methoden hergestellt. Trägerkatalysatoren sind in der DE-A 44 33 606 offenbart, wobei Wolfram- oder Molybdänoxide auf z.B. ZrO₂, TiO₂, HfO₂, Y₂O₃, Fe₂O₃, Al₂O₃, SnO₂, SiO₂ oder ZnO aufgebracht werden. Weiterhin werden ZrO₂/SiO₂-Katalysatoren empfohlen, bei denen der Träger eine Alkalimetall-Konzentration < 5000 ppm aufweist.

Alle zitierten festen Katalysatoren können prinzipiell in Strangform als auch in Suspension eingesetzt werden. Heteropolysäuren können in flüssiger Form eingesetzt werden.

Katalysatoren auf Basis saurer lonentauscher sind in US 4,120,903, insbesondere alpha-Fluorsulfonsäure enthaltende Polymere (beispielsweise Nafion^{®}), beschrieben. Weiterhin sind Katalysatoren, die ein Metall und Perfluoralkylsulfonsäure-Anionen enthalten, geeignet.

Daneben sind als Depolymerisationskatalysatoren noch weitere gegebenenfalls aktivierte Tonmineralien bekannt, offenbart beispielsweise in der WO 94/05719, WO 96/23833, WO 98/51729, WO 99/12992 und DE-A 195 134 93. Auch Zeolithe sind als Katalysatoren geeignet und werden beispielsweise in DE-A 43 16 138 beschrieben, ebenso können saure Silikate, z. B. auf Basis von Halloysit wie in US 6207793 offenbart, eingesetzt werden. Schließlich sind noch sulfatisierte Zirkonoxide, sulfatisierte Aluminiumoxide, geträgerte Heteropolysäuren und geträgertes Ammoniumbifluorid (NH₄F*HF oder Antimonpentafluorid) als geeignete Depolymerisationskatalysatoren bekannt.

Bevorzugt wird das erfindungsgemäße Verfahren mit aktivierten Bleicherden durchgeführt.

Als Vorbehandlung des Katalysators kommen beispielsweise das Trocknen mit auf 80 bis 200°C, bevorzugt auf 100 bis 180°C erwärmten Gasen, wie z.B. Luft oder Stickstoff, in Frage.

Die erfindungsgemäße Depolymerisation wird in Gegenwart eines sauren Katalysators bei Temperaturen von 80 bis 200 °C , bevorzugt 90 bis 180°C, besonders bevorzugt 100 bis 160°C und einem Druck von 0,05 bis 1,0 MPa , bevorzugt 0,075 bis 0,5 MPa , besonders bevorzugt 0,09 bis 0,25 MPa mit einem mindestens molaren Überschuß eines C₁- bis C₃- Alkohols, bezogen auf die im Gemisch enthaltenen Carboxygruppen, durchgeführt.

Die Bestimmung der Konzentration der im Ausgangsgemisch enthaltenen Carboxygruppen, das heißt der Ester und Carbonsäurengruppen, erfolgt nasschemisch durch die Bestimmung der Säure- bzw. Esterzahl.

Bevorzugt wird als C₁- bis C₃- Alkohol Methanol eingesetzt, da dass daraus gebildete Methylacetat nicht nur leicht aus dem Depolymerisationsgemisch und von dem ebenfalls gebildeten THF abgetrennt werden kann, nicht korrosiv ist, sondern auch in wirtschaftlicher Weise in das für die Polymerisation benötigte Essigsäureanhydrid zurückverwandelt werden kann.

Der C₁- bis C₃- Alkohols, bevorzugt Methanol, wird bevorzugt in einem molaren Verhältnis von 1,5:1 bis 20:1, besonders bevorzugt in einem molaren Überschuss von 3:1 bis 12:1 zu den im Gemisch der Mono- und/oder Diester des Polytetrahydrofuran enthaltenen Carboxygruppen, eingesetzt.

Das Ausgangsprodukt ist ein Gemisch von Mono- und/oder Diestern des Polytetrahydrofurans, welches sich aus den oben beschriebenen Gründen nicht für die Weiterverarbeitung zu PTHF eignet und ohne Berücksichtigung des erfindungsgemäß zuzusetzenden C₁-C₃ Alkohols zwischen 0,1 und 100 Gew.-% Mono- und/oder Diestern des Polytetrahydrofurans aufweist. Das Ausgangsprodukt kann nach den an sich bekannten Verfahren, beispielsweise nach dem in DE-A 28 01 578 beschriebenen Verfahren, durch THF-Polymerisation oder THF-Copolymerisation in Gegenwart von C₂- bis C₁₂-Carbonsäureanhydriden oder deren Gemischen mit C₂- bis C₁₂-Carbonsäuren hergestellt werden. Die Abtrennung niedermolekularer Oligomere kann beispielsweise durch Verdampfung im Vakuum wie in JP 11-269262 beschrieben ist, erfolgen. Für das erfindungsgemäße Verfahren können niedermolekulare Oligomere aber auch PTHF-Diesters aus dem Produktstrom der Polymerisation, beispielsweise nach DE -A 28 01 578 verwendet werden. Die Depolymerisation der PTHF-Diester aus dem Produktstrom kann erforderlich sein, wenn die Ester den Produktspezifikationen nicht genügen. Dieses nicht spezifikationsgerechte Produkt kann beispielsweise während einer Molmassenumstellung der Produktionsanlage; bei Verunreinigungen oder bei Betriebsstörungen gebildet werden. Ebenso können im erfindungsgemäßen Prozess Ester von PTHF eingesetzt werden, welche durch Veresterung des PTHFs nach allgemein bekannten Vorschriften, beispielsweise nach Organikum, Johann Ambrosius Barth Verlag, Heidelberg, 20. Auflage, 1996, S. 444, hergestellt wurden.

Bei dem Herstellungsverfahren durch THF-Polymerisation oder THF-Copolymerisation in Gegenwart von C₂- bis C₁₂-Carbonsäureanhydriden oder deren Gemischen mit C₂-bis C₁₂-Carbonsäuren wird in einem ersten Schritt ein Mono- und/oder Diester des PTHF's bzw. der THF Copolymere durch Polymerisation von THF in Gegenwart von Telogenen und gegebenenfalls Comonomeren an sauren, bevorzugt heterogenen Katalysatoren, wie sie vorstehend für die Depolymerisation genannt sind, hergestellt. Bevorzugt wird Bleicherde verwendet.

Die Polymerisation wird im allgemeinen bei Temperaturen von 0 bis 80°C, vorzugsweise von 10°C bis zur Siedetemperatur des THF, durchgeführt. Der angewandte Druck ist in der Regel für das Ergebnis der Polymerisation nicht kritisch, weshalb im allgemeinen bei Atmosphärendruck oder unter dem Eigendruck des Polymerisationssystems gearbeitet wird.

Zur Vermeidung der Bildung von Etherperoxiden wird die Polymerisation vorteilhaft unter einer Inertgasatmosphäre vollzogen. Als Inertgase können z. B. Stickstoff, Kohlendioxid oder die Edelgase dienen, bevorzugt wird Stickstoff verwendet.

Das Verfahren kann diskontinuierlich oder kontinuierlich betrieben, wird jedoch aus wirtschaftlichen Gründen bevorzugt kontinuierlich betrieben.

Da das Telogen zum Kettenabbruch führt, lässt sich über die eingesetzte Telogenmenge das mittlere Molekulargewicht des herzustellenden Polymers steuern. Als Telogene eignen sich Carbonsäureanhydride und/oder Carbonsäuren bei der Herstellung von Mono- und Diestern des PTHF's. Vorzugsweise werden organische Carbonsäuren oder deren Anhydride verwendet. Unter diesen sind aliphatische und aromatische Poly- und/oder Monocarbonsäuren, die 2 bis 12, bevorzugt 2 bis 8 Kohlenstoffatome enthalten.Bevorzugte Beispiele für aliphatische Carbonsäuren sind Essigsäure, Acrylsäure, Milchsäure, Propionsäure, Valeriansäure, Capronsäure, Caprylsäure und Pelargonsäure, von denen Essigsäure bevorzugt ist. Beispiele für aromatische Carbonsäuren sind Phthalsäure- und Naphthalincarbonsäure. Beispiele für Anhydride von aliphatischen Polycarbonsäuren sind Acrylsäure-Bernsteinsäure- und Maleinsäureanhydrid. Insbesondere ist Essigsäureanhydrid bevorzugt.

Die Konzentration des als Telogen eingesetzten Carbonsäureanhydrids in dem Polymerisationsreaktor zugeführten Eduktgemisch (Feed) liegt zwischen 0,03 und 30 mol-%, bevorzugt bei 0,05 bis 20 mol-%, besonders bevorzugt bei 0,1 bis 10 mol-%, bezogen auf das eingesetzte THF. Wird zusätzlich eine Carbonsäure verwendet, so beträgt das Molverhältnis im Feed der laufenden Polymerisation üblicherweise 1 : 20 bis 1 : 20000, bezogen auf eingesetztes Carbonsäureanhydrid.

Die Mono- und Diester der THF-Copolymere lassen sich herstellen durch die zusätzliche Verwendung von cyclischen Ethern als Comonomere, die sich ringöffnend polymerisieren lassen, bevorzugt drei-, vier- und fünfgliedrige Ringe, wie 1,2-Alkylenoxide, z.B. Ethylenoxid oder Propylenoxid, Oxetan, substituierte Oxetane, wie 3,3-Dimethyloxetan, die THF-Derivate 2-Methyltetrahydrofuran oder 3-Methyltetrahydrofuran, wobei 2-Methyltetrahydrofuran oder 3-Methyltetrahydrofuran besonders bevorzugt sind.

Ebenso ist die Verwendung von C₂- bis C₁₂-Diolen als Comonomeren möglich. Dies können beispielsweise Ethylenglykol, Propylenglykol, Butylenglykol, 1,3-Propandiol, 2-Butin-1,4-diol, 1,6-Hexandiol oder niedermolekulares PTHF sein. Weiterhin sind als Comonomere cyclische Ether wie 1,2-Alkylenoxide, zum Beispiel Ethylenoxid oder Propylenoxid, 2-Methyltetrahydrofuran oder 3-Methyltetrahydrofuran geeignet.

Je nach Telogengehalt der Polymerisationsmischung lassen sich mit dem Verfahren Mono- und/oder Diester des PTHF oder der THF-Copolymere mit mittleren Molekulargewichten von 250 bis 10000 Dalton gezielt herstellen, vorzugsweise werden mit dem erfindungsgemäßen Verfahren die betreffenden PTHF-Ester mit mittleren Molekulargewichten von 500 bis 5000 Dalton, besonders bevorzugt 650 bis 4000 Dalton hergestellt. Unter der Bezeichnung "mittleres Molekulargewicht" oder "mittlere Molmasse" wird in dieser Anmeldung das Zahlenmittel Mₙ des Molekulargewichts der Polymere verstanden, dessen Bestimmung durch nasschemische OH-Zahlbestimmung erfolgt.

Nach der Polymerisation werden die Ester des Polytetrahydrofurans mit dem Zielmolekulargewicht und die Mono- und/oder Diestern des Polytetrahydrofurans, die nicht das gewünschte Molekulargewicht aufweisen, mit an sich bekannten Trennverfahren getrennt.

Besonders vorteilhaft ist es, dass im erfindungsgemäßen Verfahren die Gegenwart anderer Komponenten, die im PTHF-Produktionsprozess entstehen könenn, toleriert wird. Neben PTHF-Diestern kann das erfindungsgemäß einsetzbare Gemisch der Mono- und/oder Diester des PTHFs (Polytetrahydrofuran, Diolform), cyclische THF-Oligomere, 1,4-Butandiol, Mono-/Diester von 1,4-Butandiol, THF, Carbonsäuren (z. B. Essigsäure), Carbonsäureanhydride (z. b. Acetanhydrid) und Wasser aufweisen.

Das Ausgangsprodukt, das Gemische von Mono- und/oder Diestern des Polytetrahydrofurans mit nicht dem Zielmolekulargewicht der Polymerisation entsprechenden Molekularwicht aufweist, kann darüber hinaus lineare oder cyclische Oligomere des Polytetrahydrofurans enthalten.

Bei den cyclischen Oligomeren kann es sich beispielsweise um Verbindungen der folgenden Formeln handeln: 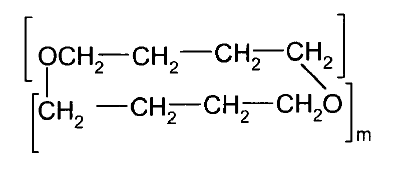 mit m = 1,2,3,4,5,6,7

Diese Oligomere werden in der Regel nach der Umesterung der Polytetrahydrofuranester zu PTHF in einem gesonderten Schritt abgetrennt und zu THF depolymerisiert. Um die Wirtschaftlichkeit des Gesamtverfahrens zur Herstellung von PTHF zu erhalten, kann das so erhaltene THF erneut der Polymerisation zugeführt. Sie können als Teil des Gemischs von Mono- und/oder Diestern des Polytetrahydrofurans mit nicht dem Zielmolekulargewicht der Polymerisation entsprechenden Molekularwicht depolymerisiert werden.

Die Erfindung wird im weiteren anhand von Beispielen näher erläutert.

### Beispiele

### Bestimmung der Esterzahl und Säurezahl

Die Bestimmung des Ester- und Carbonsäuregehalts der Ausgangsmaterialien (der im Gemisch enthaltenen Carboxygruppen) erfolgte durch Bestimmung der "Esterzahl" und der "Säurezahl" nach dem Fachmann bekannten Methoden. Zur Bestimmung der Säurezahl wurden alle enthaltenen Carbonsäuren mit einem Überschuss an Kaliumhydroxid neutralisiert und die verbleibende Stoffmenge Kaliumhydroxid wurde durch volumetrische Titration mit Salzsäure bestimmt. Zur Bestimmung der Verseifungszahl wurden alle vorhandenen Ester mit einem Überschuss an ethanolischem Kaliumhydroxid verseift. Die verbleibende Stoffmenge Kaliumhydroxid wurde durch volumetrische Titration mit Salzsäure bestimmt. Die Esterzahl ergibt sich aus der Differenz der so bestimmten Verseifungszahl und der zuvor bestimmten Säurezahl. Unter der Esterzahl wird diejenige Menge an Kaliumhydroxid in mg verstanden, die der bei der Acetylierung von 1 g Substanz gebundenen Menge Essigsäure äquivalent ist.

### Bestimmung der OH-Zahl

Die Bestimmung des Gehalts an Hydroxy-Gruppen erfolge als Bestimmung der "OH-Zahl" nach dem Fachmann bekannten Methoden. Hierzu wurden alle OH-Gruppen mit einem Überschuss an Acetylierungsreagenz (Essigsäureanhydrid) umgesetzt und die überschüssigen Säureäquivalente durch volumetrische Titration mit Kaliumhydroxid-Lösung bestimmt. Unter der OH-Zahl wird diejenige Menge an Kaliumhydroxid in mg verstanden, die der bei der Acetylierung von 1 g Substanz gebundenen Menge Essigsäure äquivalent ist.

Die mittlere molare Masse von PTHF-Diol und PTHF-Diestern kann nach folgender Formeln aus der OH-Zahl bzw. aus der Esterzahl bestimmt werden:
Molmasse (Diol) = 2000 x 56,11/OH-Zahl
Molmasse (Diester) = 2000 x 56,11/Esterzahl
Wassergehaltsbestimmung nach Karl Fischer

Die Bestimmung des Wassergehalts wurde durch Karl-Fischer-Titration durchgeführt. Dazu wurden 1 bis 3 mL der Probenlösung in einen Automaten zur Bestimmung des Wassergehalts nach der Karl-Fischer-Methode eingespritzt (Metrohm Karl Fischer Coulometer KF756). Die Messung erfolgte auf coulometrischem Weg und basiert auf der Karl-Fischer-Reaktion, der wasservermittelten Umsetzung von lod mit Schwefeldioxid.

### Analytik

Die flüchtigen Reaktionsausträge (Destillat) THF, Methylacetat, Methanol, und Essigsäure wurden gaschromatographisch analysiert. Die Mischungen wurden dazu mit einer definierten Menge eines internen Standards (Diethylenglykoldimethylether) versetzt und unverdünnt in den GC-Chromatographen (Firma HP, Trägergas: Wasserstoff) auf eine 30 m DB1-Säule (Firma J+W) gespritzt und bei Ofentemperaturen von 60°C bis 300°C (Aufheizrate 8 Kelvin pro Minute bis 220°C, dann 20 Kelvin pro Minute bis 300°C) mit einem Flammenionisationsdetektor (Temperatur: 290°C) analysiert. Die Zusammensetzung wurde durch Integration der Signale des Chromatogramms bestimmt. Die Umrechnung der Signalintensität in die Massenanteile wurde anhand einer zuvor durchgeführten Kalibrierung mit dem internen Standard (Diethylenglykoldimethylether) durchgeführt.

### Beispiel 1

In einem 1 L Mehrhalskolben mit Rührer, angeschlossener Zulaufleitung und Destillationskolonne (30 cm, gefüllt mit 6x6 mm Maschendrahtringen) wurden 35 g Bleicherde (K10-Pulver der Firma Süd-Chemie) vorgelegt. Anschließend wurde der Kolben mit 700 mL einer Zulauflösung befüllt, die sich wie folgt zusammensetzte:
21 Gew.-% PTHF-Oligomere (mittlere Molmasse Mn=250)
21 Gew.-% PTHF-Essigsäureester (mittlere Molmasse Mn = 355)
2,6 Gew.-% Essigsäure
30 Gew.-% THF
24 Gew.- % Methanol
1,2 Gew.- % Wasser

Entsprechend der vorstehend beschriebenen Methode wurde der Anteil enthaltener Carboxyfunktionen (Ester, Säure) mit 1,6·10⁻³ mol/g bestimmt. Dies entsprach hinsichtlich des zugefügten Methanols einem molaren Überschuß von 4,7 : 1, bezogen auf die im Gemisch enthaltenen Carboxygruppen.

Es wurde zum Sieden erhitzt. Sobald die Destillation einsetzte, wurden mit Hilfe einer Zulaufpumpe 30 g/h der oben beschriebenen Zulaufmischung in die Apparatur gefördert. Über die Heizung wurde ein konstanter Flüssigkeitspegel im Kolben einstellt. Die übergehenden Destillate wurden gaschromatographisch analysiert. Nach 100 Betriebsstunden wurden folgende konstante Betriebsparamater und Austragszusammensetzungen gefunden:
Ölbadtemperatur: 136°C
Sumpftemperatur: 135°C
Kopftemperatur an Destillationskolonne: 61 °C
Destillatmenge pro Stunde: 30 g

Die Zusammensetzung des Destillats wurde gaschromatographisch und titrimetrisch (Wassergehaltsbestimmung) zu 9,9 Gew.-% Methanol; 11,5 Gew.-% Methylacetat; 62,8 Gew.-% THF; 4,8 Gew.-% Wasser, < 0,1 Gew.-% Essigsäure, 11,9 Gew.-% nicht identifizierte Komponenten bestimmt.

### Beispiel 2

In einem 2 L Mehrhalskolben mit Rührer, angeschlossener Zulaufleitung und Destillationskolonne (30 cm, gefüllt mit 6x6 mm Maschendrahtringen) wurden 5 g Heteropolysäure (Wolframatophosphorsäure-Hydrat, CAS-Nr. 12501-23-4, -Handelsprodukt der Firma Sigma-Aldrich) vorgelegt und im Vakuum bei 150 °C für 12 h getrocknet. Anschließend wurde der Kolben mit 1020 g einer Zulauflösung befüllt, die sich wie folgt zusammensetzte:
25 Gew.-% PTHF-Oligomere (mittlere Molmasse Mn=1000)
27 Gew.-% PTHF-Essigsäureester (mittlere Molmasse Mn = 1100)
27 Gew.-% THF
20 Gew.-% Methanol
1 Gew.-% Wasser

Entsprechend der vorstehend beschriebenen Methode wurde der Anteil enthaltener Carboxygruppen (Ester) mit 5·10⁻⁴ mol/g bestimmt. Dies entsprach hinsichtlich des zugefügten Methanols einem molaren Überschuß von 12 : 1 bezogen auf die im Gemisch enthaltenen Carboxygruppen.

Es wurde zum Sieden erhitzt. Sobald die Destillation einsetzte, wurden mit Hilfe einer Zulaufpumpe 20 g/h der oben beschriebenen Zulaufmischung in die Apparatur gefördert. Über die Heizung wurde ein konstanter Flüssigkeitspegel im Kolben einstellt. Die übergehenden Destillate wurden gaschromatographisch analysiert. Nach 5 Betriebsstunden wurden folgende Betriebsparamater und Austragszusammensetzungen gefunden:
Kopftemperatur an Destillationskolonne: 63°C
Destillatmenge pro Stunde: 20 g

Die Zusammensetzung des Destillats wurde gaschromatographisch und titrimetrisch (Wassergehaltsbestimmung) zu 16 Gew.-% Methanol; 3 Gew.-% Methylacetat; 71 Gew.-% THF; 4 Gew.-% Wasser, <0,1 Gew.-% Essigsäure, 6 Gew.-% nicht identifizierte Komponenten bestimmt.

## Patentansprüche

1. Verfahren zur Depolymerisation von Mono- und/oder Diester des Polytetrahydrofuran enthaltenden Gemischen in Gegenwart eines sauren Katalysators und eines C₁- bis C₃-Alkohols bei Temperaturen von 80 bis 200 °C und einem Druck von 0,05 bis 0,5 MPa, wobei das molare Verhältnis des C₁- bis C₃-Alkohols zu den im Gemisch enthaltenen Carboxygruppen größer 1 ist.

2. Verfahren nach Anspruch 1, **dadurch gekennzeichnet, dass** Methanol verwendet wird.

3. Verfahren nach Anspruch 1 oder 2, **dadurch gekennzeichnet , dass** Methanol in einer molaren Menge von 1,5:1 bis 20:1, bezogen auf die im Gemisch enthaltenen Carboxygruppen, eingesetzt wird.

4. Verfahren nach einem der Ansprüche 1 bis 3, **dadurch gekennzeichnet, dass** ein fester saurer Katalysator ausgewählt aus sauren Silikaten, saurer Tonerde, Bleicherde, sulfatisiertem Zinkoxid, sulfatisiertem Zirkondioxid, sulfatisiertem Aluminiumoxid, sulfatisiertem Wolfram-Zirkondioxid, Heteropolysäuren, Zeolithen und sauren lonentauschern verwendet wird.

5. Verfahren nach einem der Ansprüche 1 bis 4, **dadurch gekennzeichnet, dass** Bleicherde als Katalysator verwendet wird.

6. Verfahren nach einem der Ansprüche 1 bis 5, **dadurch gekennzeichnet, dass** bei Temperaturen von 100 bis 160°C und einem Druck von 0,075 bis 0,5 MPa depolymerisiert und umgeestert wird.

7. Verfahren nach einem der Ansprüche 1 bis 6, **dadurch gekennzeichnet, dass** das Gemisch niedermolekulare lineare und/oder cyclische Oligomere des Polytetrahydrofurans enthält.

8. Verfahren nach einem der Ansprüche 1 bis 7, **dadurch gekennzeichnet, dass** das Gemisch THF enthält.

9. Verfahren nach einem der Ansprüche 1 bis 8, **dadurch gekennzeichnet, dass** das Gemisch Wasser enthält.

## Claims

1. A process for depolymerizing mixtures comprising mono- and/or diesters of polytetrahydrofuran in the presence of an acidic catalyst and of a C₁- to C₃-alcohol at temperatures of from 80 to 200°C and a pressure of from 0.05 to 0.5 MPa, where the molar ratio of the C₁- to C₃-alcohol relative to the carboxyl groups present in the mixture is greater than 1.

2. The process according to claim 1, wherein methanol is used.

3. The process according to claim 1 or 2, wherein methanol is used in a molar amount of from 1.5:1 to 20:1, based on the carboxyl groups present in the mixture.

4. The process according to any of claims 1 to 3, wherein a solid acidic catalyst selected from acidic silicates, acidic alumina, bleaching earth, sulfated zinc oxide, sulfated zirconium dioxide, sulfated aluminum oxide, sulfated tungsten zirconium dioxide, heteropolyacids, zeolites and acidic ion exchangers is used.

5. The process according to any of claims 1 to 4, wherein bleaching earth is used as a catalyst.

6. The process according to any of claims 1 to 5, wherein depolymerization and transesterification are effected at temperatures of from 100 to 160°C and a pressure of from 0.075 to 0.5 MPa.

7. The process according to any of claims 1 to 6, wherein the mixture comprises low molecular weight linear and/or cyclic oligomers of polytetrahydrofuran.

8. The process according to any of claims 1 to 7, wherein the mixture comprises THF.

9. The process according to any of claims 1 to 8, wherein the mixture comprises water.

## Revendications

1. Procédé de dépolymérisation de mélanges contenant des mono- et/ou diesters de polytétrahydrofurane en présence d'un catalyseur acide et d'un alcool en C₁ à C₃ à des températures de 80 à 200°C et à une pression de 0,05 à 0,5 MPa, le rapport molaire entre l'alcool en C₁ à C₃ et les groupes carboxy contenus dans le mélange étant supérieur à 1.

2. Procédé selon la revendication 1, **caractérisé en ce que** du méthanol est utilisé.

3. Procédé selon la revendication 1 ou 2, **caractérisé en ce que** du méthanol est utilisé en une quantité molaire de 1,5:1 à 20:1, par rapport aux groupes carboxy contenus dans le mélange.

4. Procédé selon l'une quelconque des revendications 1 à 3, **caractérisé en ce qu'**un catalyseur acide solide choisi parmi les silicates acides, l'alumine acide, l'argile smectique, l'oxyde de zinc sulfaté, le dioxyde de zirconium sulfaté, l'oxyde d'aluminium sulfaté, le dioxyde de tungstène-zirconium sulfaté, les hétéropolyacides, les zéolithes et les échangeurs d'ions acides est utilisé.

5. Procédé selon l'une quelconque des revendications 1 à 4, **caractérisé en ce qu'**une argile smectique est utilisée en tant que catalyseur.

6. Procédé selon l'une quelconque des revendications 1 à 5, **caractérisé en ce que** la dépolymérisation et la transestérification sont réalisées à des températures de 100 à 160°C et à une pression de 0,075 à 0,5 MPa.

7. Procédé selon l'une quelconque des revendications 1 à 6, **caractérisé en ce que** le mélange contient des oligomères linéaires et/ou cycliques de poids moléculaire faible de polytétrahydrofurane.

8. Procédé selon l'une quelconque des revendications 1 à 7, **caractérisé en ce que** le mélange contient du THF.

9. Procédé selon l'une quelconque des revendications 1 à 8, **caractérisé en ce que** le mélange contient de l'eau.
